**Europäisches Patentamt**

**European Patent Office**

**Office européen des brevets**

(19)

(11) Publication number: **0 228 165 B1**

# EUROPEAN PATENT SPECIFICATION

(12)

(45) Date of publication of the patent specification: 10.10.90

(51) Int. Cl.⁵: **F16G 11/00**

(21) Application number: **86308697.1**

(22) Date of filing: **07.11.86**

(54) Connecting apparatus for connecting lines.

(30) Priority: **20.12.85 JP 288888/85**

(43) Date of publication of application:
**08.07.87 Bulletin 87/28**

(45) Publication of the grant of the patent:
**10.10.90 Bulletin 90/41**

(84) Designated Contracting States:
**BE DE FR GB IT NL SE**

(56) References cited:
**DE-C- 377 479**
**GB-A- 383 368**
**GB-A- 623 649**
**GB-A- 2 091 770**
**US-A- 1 701 801**
**US-A- 2 412 948**
**US-A- 2 591 437**
**US-A- 2 931 009**

(73) Proprietor: **MEITOH DENKI KOHJI KABUSHIKI KAISHA, 7-2, 3-chome, Hiroji-dori Showa-ku, Nagoya-shi Aichi-ken(JP)**

(72) Inventor: **Asai, Masaki, 50-118 Yomogi-bora Inokoshi Idaka-cho Meitoh-ku, Nagoya-shi, Aichi-ken(JP)**

(74) Representative: **Jones, Michael Raymond et al, HASELTINE LAKE & CO. Hazlitt House 28 Southampton Buildings Chancery Lane, London WC2A 1AT(GB)**

## Description

This invention relates to an apparatus for connecting lines, such as cables, cords, wires or ropes, and particularly it relates to a connecting apparatus which can be advantageously used to connect ropes used in a stringing operation of power transmission cables so as to tense or fix the latter.

Furthermore, the present invention can also be adapted to connect ropes or wires for rope construction, such as a suspension bridge, a ropeway or a cable railway; or ropes or wires for supporting masts or posts or the like.

Ropes which are used in a stringing operation of power transmission cables usually have looped ends which can be connected to or engaged by another cable for extension.

The looped end is usually made in a so-called eye-splice process in which the strands of the terminal end of the rope are frayed and twisted, so that the strands are woven into the terminal end portion of the rope itself. The eye-splice provides a relatively large strength, in comparison with other connecting means such as chips. This, however, is a relatively complex operation requiring a highly skilled person.

From DE-A 377 479 there is known a line coupling for unloaded free-line cables, in which two sleeves with planar contact faces are held together by a union nut and placed over a centering bolt, each have inserted into them cones with slots at their outer ends which can receive cable ends, which cable ends are secured therein by a nut. The sleeves may rotate relative to each other.

From US-A 2 931 009, there is known an electrical connector in which two contact members with planar contact faces are free to rotate relative to each other, and are secured together by a single nut.

From GB-A 383 368 there is known an electrical connector in which two contact members, which have complemental conical and recessed conical shaped ends, may rotate relative to each other, and are secured together by a single nut.

From US-A 2 591 435 there is known a connecting device for cables provided with two identical connecting members each to be attached to one cable and having an external screw thread to which an outer sleeve is threaded for protection, the two outer sleeves abutting each other and which connecting members are held together by means of inclined contact surfaces with which they are provided and which are shaped so that the contact pressure is increased when the cables are pulled apart.

According to the present invention, there is provided an apparatus for connecting lines, comprising: first and second connecting elements (20, 30) having end pieces (21, 31) which have opposed end faces (25, 35) which are capable of coming into contact with each other and which end pieces have complemental shapes to each other, one end piece (21) being provided with an abutment (27) and at least the other end piece (31) being provided with an outwardly directed peripheral threaded portion (37); and one, but only one nut member (40) in which said end pieces (21, 31) can be inserted and which is provided with an inwardly directed there aded portion (47), so that said threaded portion (37) of the end piece(s) (31) can be screwed within the nut member (40), said nut member (40) being provided with a counter abutment (45) which can engage said abutment (27) of the one end piece (21) so that, when the end pieces (21, 31) are inserted in the nut member (40), the end pieces (21, 31) can be integrally connected in and to the nut member (40) by the screw engagement between the threaded portion (37) of the other end piece (3) and the nut member (40) and by the engagement between said abutment (27) and the counter abutment (45) characterized in that the complemental shape of each end piece comprises spaced circumferential projections directed parallel to the axis and recesses therebetween such that, when the end faces are in abutting contact by having said projections of one end face received in said recesses on the other end face, relative rotation of said end pieces in prevented.

The present invention provides a simple apparatus for connecting lines, such as cables, ropes, wires or the like, which is free from the troublesome operations involved in the conventional eye-splice process referred to above.

In preferred embodiment, said abutment is made of an annular shoulder face provided on one of the end pieces and wherein said counter abutment is made of a restricted end face provided on the nut member.

In another preferred embodiment, each of said end pieces has a rope or similar member connected thereto.

In another preferred embodiment, said ropes are made of strands and are connected to the respective end pieces by the strands being frayed and spread in the end pieces together with an adhesive.

In another preferred embodiment, at least one of said end pieces has, at its end remote from the opposed end face, an eye piece.

In another preferred embodiment, at least one of said end pieces has, at its end remote from the opposed end face, a connecting jaw.

In another preferred embodiment, each of said end pieces comprises a substantially cylindrical hollow body.

For a better understanding of the present invention and to show how the same may be carried into effect, reference will now be made, by way of example, to the accompanying drawings, in which:

Fig. 1 is a longitudinal sectional view of one embodiment of a connecting apparatus according to the present invention;

Fig. 2 is an exploded perspective view of the connector elements shown in Fig. 1;

Fig. 3 is a longitudinal sectional view of the connector elements shown in Fig. 1;

Fig. 4 is a longitudinal sectional view of a connecting apparatus according to another embodiment of the present invention;

Fig. 5 is an exploded perspective view of the connector elements shown in Fig. 4;

Fig. 6 is a side elevational view of a connector element with an eye piece; and,

Fig. 7 is a side elevational view of a connector element with a connecting jaw.

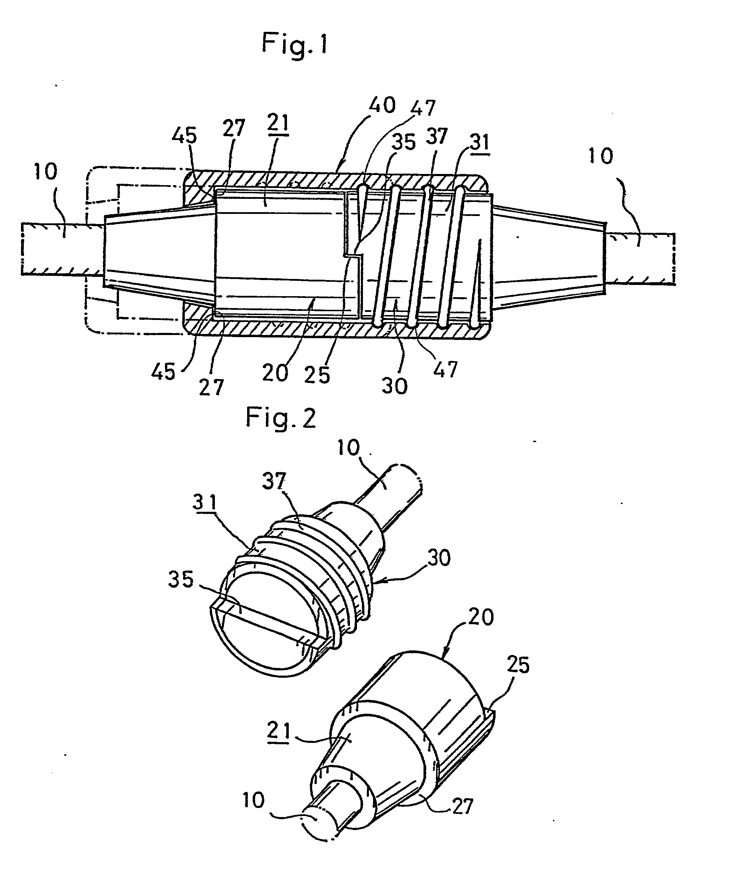

As can be seen from Fig. 1 the connecting apparatus of the present invention has a pair of connector elements 20 and 30 which have end pieces 21 and 31 having ropes 10 connected thereto or other anchoring or connecting means 15 or 16 to which ropes etc. are connected, respectively (Figures 6 and 7). Each of the end pieces 21 and 31 is preferably made of a cylindrical metal piece or iron or chromium molybdenum steel, or the like.

The cylindrical end piece 21 of the connector element 20 has a stepped end 25 opposed to the end piece 31. The rope 10 (or 15, 16) is connected to the other end of the end piece 21. The end piece 21 is also provided, on its outer periphery, with a shoulder portion 27. The stepped end 25 can be made by cutting a half of the circular end face of the end piece 21 away, so that the stepped end 25 consists of a semicircular projection and a semicircular recess. The peripheral shoulder portion 27 has a continuous annular shoulder face, as can be seen in Fig. 2.

The end piece 31 of the connector element 30 has a stepped end 35 which has a shape complemental to the shape of the stepped end 25, so that the stepped end 35 can be snugly engaged by the stepped end 25 of the end piece 21 when the two end pieces 21 and 31 come into contact with each other.

The end piece 31 is provided, on its outer periphery, with a threaded portion 37 which can be engaged in a nut member 40 which will be described in detail hereinafter. The two end pieces 21 and 31 are aligned and are brought into contact with each other so that the stepped end faces of the stepped ends 25 and 35 face to each other. When the stepped ends 25 and 35 are opposed to each other, the semicircular recessed portion of the stepped end 25 comes into contact with the semicircular projection of the end 35 and the semicircular projection end 25 comes into contact with the semicircular recessed portion of the end 35, respectively, so that the two end pieces 21 and 31 are connected to each other so as not to relatively rotate.

The cylindrical hollow nut member 40 has a restricted end face (a counter abutment) 45 at one end, so that the shoulder portion (abutment) 27 of the end piece 21 comes into contact with the end face 45 when the end piece 21 is fully inserted in the nut member 40, thus preventing the end piece 21 from coming out of the nut member 40. The nut member 40 is provided, on its opposite end, with a female threaded portion 47 on the inner periphery thereof. The threaded portion 37 of the end piece 31 can be screwed into the threaded portion 47 of the nut member 40. Thus, the two connector elements 20 and 30 can be connected together in and by the nut member 40. The nut member 40 is preferably made of iron or chromium molybdenum steel similar to the end pieces 21 and 31. When the end piece 31 is screwed into the nut member 40, the shoulder portion 27 of the end piece 21 is tightly pressed against the inner end face 45 of the nut member 40.

The connection of the rope 10 to the end piece 21 or 31 can be effected as follows.

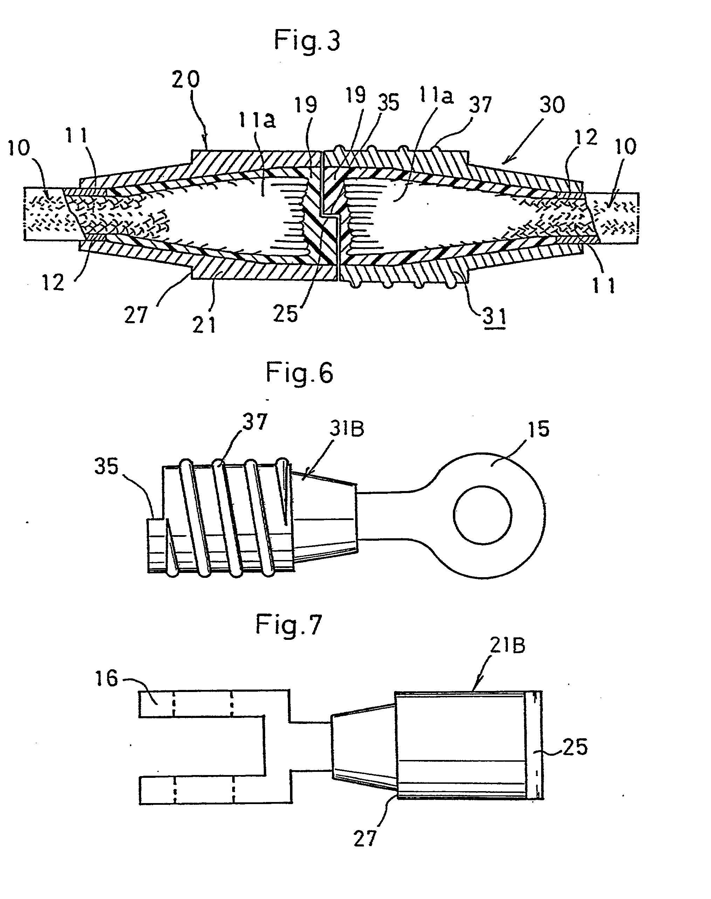

With reference to Fig. 3, the end portions 11a of the strands 11, of which the rope 10 is made, are frayed and spread with a resin adhesive 19, such as epoxy resin, in the associated hollow end piece 21 or 31, so that the frayed ends of the stands 11 can be firmly connected to and in the end piece by the adhesive 19. The numeral 12 designates a protecting insulation layer of the rope 10, such as polyurethane.

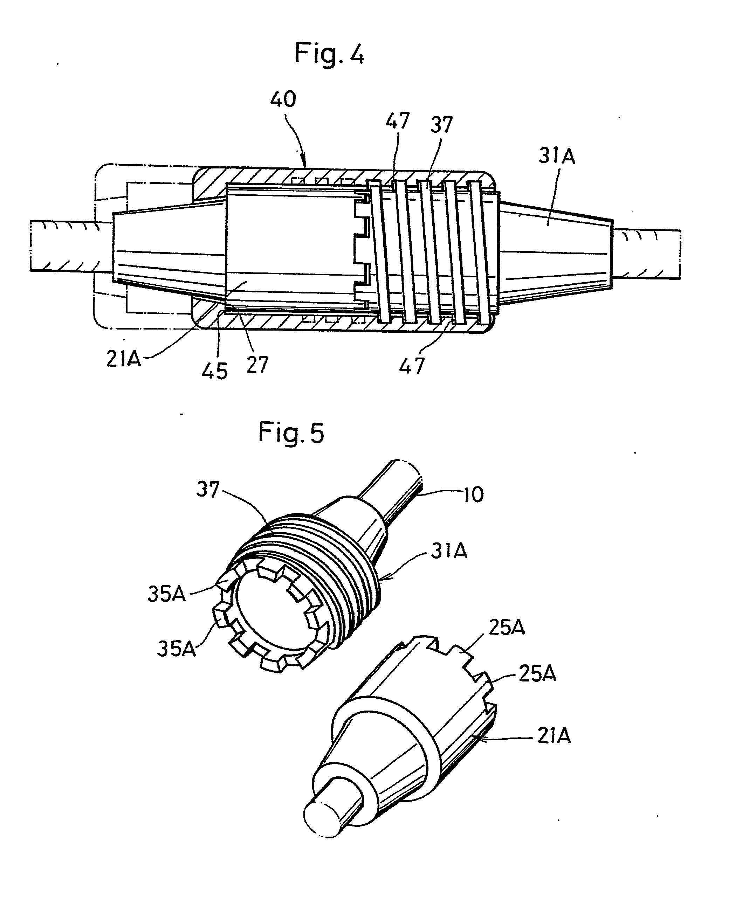

Figs. 4 and 5 show a variant of the end pieces 21A and 31A. In the arrangement illustrated in Figs. 4 and 5, the end piece 21A has spaced circumferential, paraxial projections 25A on its one end, and the end piece 31A has, on its one end, spaced circumferential, paraxial projections 35A which are complementary to the spaced projections 25A of the end piece 21A. Elements other than the complemental end shapes of the end piece 21A and 31A are the same as those shown in Fig. 1.

In a different embodiment, shown in Figs. 6 and 7, the end pieces 31B and 21B have an eye piece 15 and a connecting jaw 16 instead of the ropes 10, respectively. The eye piece 15 and the jaw 16 can be connected to the respective end pieces 31B and 21B, for example, by means of welding. Alternatively, it is also possible to make the eye piece and the jaw integral with the respective end pieces as a single piece, respectively.

As can be understood from the above discussion, according to the present invention, ropes, wires, cables or the like can be easily connected by means of the respective end pieces connected thereto and the nut member which can be engaged by the end pieces. Furthermore, according to a preferred arrangement of the present invention, since the end faces of the opposed end pieces have complemental shapes, no rotation between the end pieces takes place, when they are connected to each other, by virtue of the nut member which is rotated when being fastened. The end pieces can be easily connected not only to ropes, wires, cables or other line materials, but also to connecting means, such as eye pieces, hook or connecting jaws, to which the ropes or the like are connected. According to the present invention, since no eye-splice process is necessary, unlike the prior art, no highly skilled operator is needed in a stringing operation. In addition to the foregoing, the connecting apparatus of the present invention can be mass-produced.

## Claims

1. An apparatus for connecting lines, comprising: first and second connecting elements having end pieces which have opposed end faces which are capable of coming into contact with each other and which end pieces have complemental shapes to each other, one end piece being provided with an abutment and at least the other end piece being provided with an outwardly directed peripheral threaded portion; and one, but only one, nut member in which said end pieces can be inserted and which is provided with an inwardly directed threaded portion, so that said threaded portion of the end piece(s) can be screwed within the nut member, said nut member being provided with a counter abutment which can engage said abutment of the one end piece so that, when the end pieces are inserted in the nut member, the end pieces can be integrally connected in and to the nut member by the screw engagement between the threaded portion of the other end piece and the nut member and by the engagement between said abutment and the counter abutment characterized in that the complemental shape of each end piece comprises spaced circumferential projections directed parallel to the axis and recesses therebetween such that, when the end faces are in abutting contact by having said projections of one end face received in said recesses on the other end face, relative rotation of said end pieces is prevented.

2. An apparatus according to claim 1, wherein said abutment is made of an annular shoulder face provided on one of the end pieces and wherein said counter abutment is made of a restricted end face provided on the nut member.

3. An apparatus according to claim 1 or 2, wherein each of said end pieces has a rope or similar member connected thereto.

4. An apparatus according to claim 3, wherein said ropes are made of strands and are connected to the respective end pieces by the strands being frayed and spread in the end pieces together with an adhesive.

5. An apparatus according to claims 1 or 2, wherein at least one of said end pieces has, at its end remote from the opposed end face, an eye piece.

6. An apparatus according to claims 1 or 2, wherein at least one of said end pieces has, at its end remote from the opposed end face, a connecting jaw.

7. An apparatus according to any preceding claim, wherein each of said end pieces comprises a substantially cylindrical hollow body.

**Patentansprüche**

1. Verbindungsvorrichtung für Leitungen, erste und zweite Verbindungselemente umfassend, welche Endstücke mit sich gegenüberliegenden Endseiten, die miteinander in Berührung kommen können, aufweisen und dessen Endstücke zueinander komplementäre Formen aufweisen, wobei ein Endstück mit einem Anschlag versehen ist und mindestens das andere Endstück eine äussere gerichtete am Umfang angebrachte Gewindestrecke aufweist; und mit einem, aber nur einem, Schalenelement in welches die Endstücke eingeführt werden können und welches eine an der Innenseite angebrachte gerichtete Gewindestrecke aufweist, so dass die äussere Gewindestrecke in das Schalenelement geschraubt werden kann, wobei das Schalenelement einen Gegenanschlag aufweist, der mit dem Anschlag des einen Endstückes zusammen wirken kann, so dass wenn die Endstücke im Schalenelement eingeführt sind, sie vollständig in und zu dem Schalenelement durch die Schraubenverbindung zwischen der Gewindestrecke des anderen Endstückes und des Schalenelementes und durch das Zusammenwirken zwischen dem Anschlag und dem Gegenanschlag verbunden sind, dadurch gekennzeichnet, dass die komplementäre Form von jedem Endstück mit Hilfe von parallel zur Achse gerichteten, mit Abstand am Umfang angebrachten Verlängerungen erreicht wird, wobei zwischen den Verlängerungen Abstände derart bestehen dass, wenn die Endseiten in Anschlagsberührung sind, die Verlängerungen an einer Endseite in die offenen Abstände der anderen Endseite hineinragen, so dass eine relative Drehung der Endstücke nicht möglich ist.

2. Verbindungsvorrichtung gemäss Anspruch 1, dadurch gekennzeichnet, dass der Anschlag als Seite einer Ringschulter auf einem der Endstücke ausgebildet ist und dass der Gegenanschlag in einer beschränkten Endseite des Schalenelementes besteht.

3. Verbindungsvorrichtung gemäss Anspruch 1 oder 2, dadurch gekennzeichnet, dass jedes der Endstücke mit einem Seil oder etwas ähnlichem verbunden ist.

4. Verbindungsvorrichtung gemäss Anspruch 3, dadurch gekennzeichnet, dass die Seile aus Litzen bestehen und mit den zugehörigen Endstücken durch die Litzen die in den Endstücken ausgefasert und ausgebreitet sind, mit einem Klebstoff verbunden sind.

5. Verbindungsvorrichtung gemäss Anspruch 1 oder 2, dadurch gekennzeichnet, dass mindestens eines der Endstücke am Ende, welches entfernt zur gegenüberliegenden Endseite liegt, ein Auge aufweist.

6. Verbindungsvorrichtung gemäss Anspruch 1 oder 2, dadurch gekennzeichnet, dass mindestens eines der Endstücke am Ende, welches entfernt zur gegenüberliegenden Endseite liegt, eine Verbindungsbacke aufweist.

7. Verbindungsvorrichtung gemäss einem der Ansprüche 1 bis 6, dadurch gekennzeichnet, dass mindestens eines der Endstücke einen im wesentlichen hohlen zylindrischen Körper umfasst.

**Revendications**

1. Appareil pour relier des lignes, comprenant: de premiers et de seconds éléments de liaison ayant des pièces d'extrémité qui ont des faces d'extrémité opposées qui sont capables de venir en contact l'une avec l'autre et qui ont des formes complémentaires l'une de l'autre, l'une des pièces d'extrémité étant pourvue d'une butée et au moins l'autre pièce d'extrémité étant pourvue d'une partie périphérique filetée dirigée vers l'extérieur; et un, mais seulement un élément écrou dans lequel les pièces d'extrémité peuvent être introduites et qui est muni d'une partie filetée dirigée vers l'intérieur, en sorte que la partie filetée de la (ou des) pièces d'extrémité puisse être vissée dans l'élément écrou, cet élément écrou étant pourvu d'une contre-butée qui peut venir en contact avec la butée de la première pièce d'extrémité, en sorte que, lorsque les pièces d'extrémité sont introduites dans l'élément écrou, les pièces d'extrémité puissent être reliées intégralement dans et à l'élément écrou par le contact à filets entre la partie filetée de l'autre pièce d'extrémité et l'élément écrou et par le contact entre ladite butée et la contre-butée, caractérisé en ce que la forme complémentaire de chaque pièce d'extrémité comprend des saillies circonférentielles espacées, dirigées parallèlement à l'axe et des évidements entre elles de telle façon que lorsque les faces d'extrémité sont en contact avec butée en ayant lesdites saillies de l'une des faces d'extrémité reçues dans lesdits évidements de l'autre face d'extrémité, une rotation relative desdites pièces d'extrémité soit empêchée.

2. Appareil suivant la revendication 1, dans lequel ladite butée est faite d'une face d'épaulement annulaire prévue sur l'une des pièces d'extrémité, et dans lequel la contre-butée est faite d'une face d'extrémité réduite prévue sur l'élément écrou.

3. Appareil suivant la revendication 1 ou la revendication 2, dans lequel chacune desdites pièces d'extrémité a un cordage ou un élément semblable qui lui est relié.

4. Appareil suivant la revendication 3, dans lequel lesdits cordages sont faits de brins et sont reliés aux pièces d'extrémité respectives par le fait que les brins sont divisés et sont étendus dans les pièces d'extrémité, ensemble avec un adhésif.

5. Appareil suivant la revendication 1 ou la revendication 2, dans lequel au moins l'une des pièces d'extrémité présente, à son extrémité éloignée de la face d'extrémité opposée, une pièce formant œilleton.

6. Appareil suivant la revendication 1 ou la revendication 2, dans lequel au moins l'une des pièces d'extrémité présente, à son extrémité éloignée de la face d'extrémité opposée, une mâchoire de liaison.

7. Appareil suivant l'une quelconque des revendications précédentes, dans lequel chacune des pièces d'extrémité comprend un corps creux sensiblement cylindrique.

## Fig. 1

## Fig. 2

Fig.3

Fig.6

Fig.7

# Fig. 4

40 47 37 31A

21A 45 27 47

# Fig. 5

37 10

35A 31A

35A

35A 25A

25A

21A